# EUROPEAN PATENT APPLICATION

(11) **EP 1 445 700 A1**
(43) Date of publication of application: **11.08.2004**
(21) Application number: 03100270.2
(22) Date of filing: 10.02.2003
(51) Int. Cl.: G06F 12/06

(54) **Bus system and method for assigning addresses to peripheral units**

(71) Applicant: Delphi Technologies, Inc., Troy, MI 48007 (US)
(72) Inventor: Würth, Lukas, 6860, EBLY (BE); Groult, Hervé, 54380, DIEULOUARD (FR); Dupont, Bertrand, 8080, BETRANGE (LU)
(74) Representative: Beissel, Jean

(57) **Abstract**

A bus system (10) comprises a bus controller (12) and a bus wiring (14) comprising at least one bus line (16) and connected at one end to the bus controller (12). A number of connectors (22₁...22₄) for peripheral units (24) are arranged in series along the bus wiring (14) and a number of peripheral units (24) are each connected to a respective connector (22ᵢ) on the bus wiring (14). The bus system (10) is designed in such a way that, as long as a peripheral unit (24) has not been connected to a given connector (22ᵢ), communication in the at least one bus line (16) downstream of this connector (22ᵢ) is interrupted, and that upon connection to a peripheral unit (24) communication in the at least one bus line (16) is restored at this connector (22i). The bus controller (12) comprises means for detecting a default-addressed peripheral unit (24) on the bus wiring (14) and assigning an address thereto.

## Description

### FIELD OF THE INVENTION

The present invention generally relates to a bus system and to a method for assigning addresses to peripheral units in such a bus system.

### BACKGROUND OF THE INVENTION

Present-day motor vehicles are equipped with a large number of electronic units, which have to exchange data with one another in order to perform their various functions. The conventional method of doing so by using dedicated data lines for each link is now considered unadapted, as it becomes too complex with regard to the structure of the wiring harness and connectors design. As an alternative, specialised, vehicle-compatible bus systems have been developed and are now widely used.

There are different areas of applications for bus systems in a vehicle, each with its own individual requirements, such as e.g.: transmission-shift control, air-conditioning, central locking, navigation and audio systems and engine diagnostic.

A bus system typically includes a bus controller, a bus harness with a number of connectors thereon, and peripheral units connected to the connectors. Each peripheral unit in the bus system reads and/or sends information according to a protocol that generally requires that every peripheral unit has a unique address.

When identical peripheral units are used several times on a bus, it is preferred that the addresses are assigned as late as possible in order to avoid early differentiation in the manufacturing and thereby simplify the latter.

To distinguish identical peripheral units in a bus system, it is known to assign an address to each peripheral unit by means of a fixed plug contact. Unfortunately, this requires a complex design of the bus system, since each plug contact on the bus harness must be different.

It is also known to allocate addresses to peripheral units in a bus system by means of coding switches provided on each unit, that are manually set before assembly to the bus system. To avoid manual setting, it has further been proposed to program an address in each of the peripheral units before their assembly to the bus system, by storing the address in a memory (e.g. EEPROM). However, in both cases, operators may invert the positions of two peripheral units on the bus harness, so that the bus controller will drive a peripheral unit having a wrong address with regard to its position in the system. In addition, using pre-programmed peripheral units involves vast and expensive logistical support around the assembly line, since the identical peripheral units must be distinguishable from each other with respect to their address.

### OBJECT OF THE INVENTION

The object of the present invention is to provide an improved bus system, wherein addresses are automatically assigned to peripheral units and assembly errors are prevented. This object is achieved by a bus system as claimed in claim 1.

### SUMMARY OF THE INVENTION

A bus system according to the present invention comprises a bus controller and a bus wiring including at least one bus line and connected at one end to the bus controller. A number of connectors for peripheral units are arranged in series along the bus wiring. A number of peripheral units are each connected to a respective connector on the bus wiring. It will be appreciated that the bus system is designed in such a way that, as long as a peripheral unit has not been connected to a given connector, the communication in the at least one bus line downstream of the connector is interrupted; and that upon connection to a peripheral unit, communication in the bus line is restored at this connector. Furthermore, the bus controller comprises means for detecting a default-addressed peripheral unit on the bus wiring and assigning an address thereto.

The term " default-addressed peripheral unit" herein refers to a peripheral unit that has not yet been idenfied by the system, and that has a default address value, e.g. programmed by the manufacturer, identical for all the peripheral units of the same kind. Upon connection to the bus system, such a default-addressed peripheral unit will be detected, based on its default address, as a unit to which an individual address must be assigned.

The present bus system allows an automatic addressing and an error free connection of peripheral units. Indeed, in the present bus system―due to its design-the peripheral units must be connected one after another, following the order of the connectors on the bus wiring and starting with the connector closest to the bus controller. Upon connection of each peripheral unit, the bus controller automatically detects the presence of a default-addressed―and thus non identified―peripheral unit, and then assigns a unique address thereto. The connection of the peripheral unit also restores the communication in the interrupted bus line at the level of the connector, so that communication in the bus line is permitted between the bus controller and the neighbouring unoccupied connector. If the next peripheral unit is not connected to this neighbouring connector, but to another one downstream, there is no communication in the bus line of the bus wiring and the bus controller will not be able to detect it, so that an address cannot be assigned. Due to the structure of the bus system, the bus controller will necessarily know the position of the peripheral units on the bus wiring. Hence, in the present bus system, addresses are automatically assigned to the peripheral units upon their assembly in the circuit, without help of the operator, which simplifies his work. In addition, the design of the bus system imposes an order of assembly, so that assembly errors can be avoided.

The bus system advantageously comprises means for signalling to an operator that an address has been assigned to a peripheral unit. This can be for example an audio or visual signal that may be emitted either by the bus controller or the peripheral unit itself. If a peripheral unit is connected to a connector that is not in communication with the bus controller, it will not be detected and no address will be assigned thereto, so that no signal will be emitted. The lack of signal will indicate the operator that the peripheral unit has been connected to a wrong connector.

In a preferred embodiment, the at least one bus line is interrupted at the level of each connector. Thus, each of the peripheral units comprises means for restoring the interrupted line at the level of the connector upon connection thereto.

Depending on the bus technology, the bus wiring may comprise one bus line or a plurality of bus lines. The bus wiring preferably comprises at least two wires and at least one of them is interrupted at the level of each connector.

More particularly, the bus system is preferably based on the CAN or LIN bus technologies, which use 4, respectively 3, bus lines.

The bus wiring may be one of a wiring harness, a rigid printed circuit board and a flexible printed circuit board.

The present bus system is particularly suitable for application in the control of an HVAC system, wherein a plurality of identical actuators need to be controlled. The capability of the system of automatically allocating addresses and preventing erroneous connections to the bus system simplifies the work on the assembly line, since no differentiation of actuators is required before assembly.

According to another aspect of the invention, a method for assigning an address to peripheral units in a bus system is proposed. The bus system comprises a bus controller and a bus wiring including at least one bus line and connected at one end to the bus controller. A number of connectors for peripheral units are arranged in series along the bus wiring. The bus system is designed so that the at least one line of the bus wiring is interrupted at each connector that is not connected to a respective peripheral unit, and that upon connection of a respective peripheral unit the line is restored. The method comprises the steps of:
(a) detecting the presence of a default-addressed peripheral unit in the bus system; and
(b) upon detection of a default-addressed peripheral unit, assigning an address to the default-addressed peripheral unit.

Due to the structure of the bus system, an address can only be allocated to a properly connected peripheral unit, i.e. that has been assembled to the proper connector. In order to be capable of individually controlling the peripheral units in the system, the address assigned to the detected default-addressed unit at step (b) is different from the other addresses already used in the system.

It is clear that the bus system is in an active state (i.e. in operation) when the peripheral units are assembled to the connectors, in order to readily perform steps (a) and (b).

In this context, step (a) preferably includes periodically interrogating the peripheral units connected to the bus system, to detect a default-addressed peripheral unit. Before all peripheral units have been assembled to the bus system, the controller may e.g. interrogate the bus lines every second.

It remains to be noted that the initial default address value of a peripheral unit may constitute an indication to the bus controller on how to program or use the peripheral unit. Indeed, depending on the default address value that is contained in the default-addressed peripheral unit, one may distinguish different types of peripheral units (e.g. different suppliers) or different types of situation (like e.g. assembly in production vs. replacement of the peripheral unit in aftermarket). The initial default address value programmed in a default-addressed peripheral unit may thus be used by the bus controller for determining the subsequent control of the peripheral unit.

### BRIEF DESCRIPTION OF THE DRAWINGS

The present invention will now be described, by way of example, with reference to the accompanying drawings, in which:
FIG.1: is a sketch of a preferred embodiment of a bus system according to the invention, with one peripheral unit connected to the bus wiring;
FIG.2: is a sketch of the present bus system with two peripheral units connected to the bus wiring.

### DETAILED DESCRIPTION OF A PREFERRED EMBODIMENT

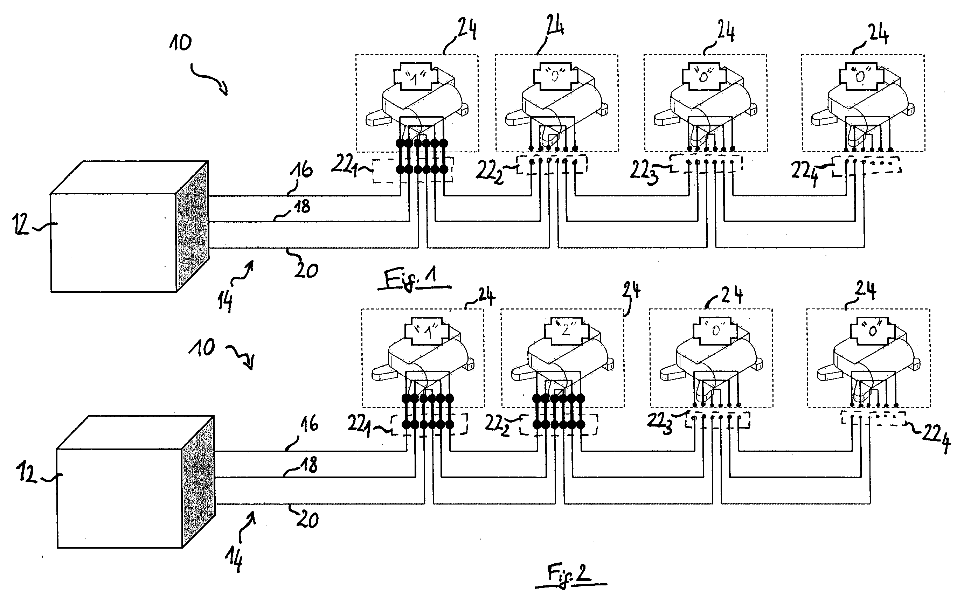

A preferred embodiment of a bus system 10 in accordance with the invention is schematically illustrated in Figs.1 and 2. The bus system 10 comprises a bus controller 12 and a bus wiring 14 connected at one end to the bus controller 12. The communication protocol in the bus system 10 is preferably based on the LIN bus, and the bus wiring thus preferably includes three separate lines: a signal line 16, a supply line 18 and a ground line 20.

The bus wiring 14 is provided with four connectors 22₁...22₄ for peripheral units, that are arranged in series. Reference sign 24 indicates four identical peripheral units (schematically represented) to be connected to the bus system 10 to enable their control by the bus controller 12 in order to achieve their functions. The peripheral units 24 may be e.g. actuators for controlling flaps in a heating ventilating and air-conditioning (HVAC) module. The bus wiring 14 may then be in the form of a wiring harness or a flexible printed circuit board attached to the surface of the HVAC module.

The control of each individual peripheral unit 24 is carried out by sending data on the signal line 16, that are received and processed by a control interface in each peripheral unit 24; such an interface may be designed so as to be capable of receiving data from, and/or sending data to, the bus controller 12. The supply line 16 and ground line 18 provide the power necessary for the operation of the peripheral units 24. To allow an individual control of the peripheral units 24 connected to the bus system 10, each peripheral unit 24 normally has a unique address.

It will be appreciated that the present bus system 10 is designed in such a way that, as long as a peripheral unit 24 has not been connected to a given connector 22ᵢ, the bus lines 16, 18, 20 are interrupted at the level of this connector 22ᵢ, and that the bus lines 16, 18, 20 are restored upon connection to a peripheral unit 24. Hence, when a given connector 22ᵢ is unoccupied (i.e. not connected to a peripheral unit), there is no communication in the bus wiring 14 downstream (with regard to the position of the bus controller 12) of the connector 22ᵢ. This means that the bus controller may not communicate with another peripheral unit 24 connected to a further connector 22ₖ downstream of the unoccupied connector 22ᵢ.

In the present embodiment, each of the connectors 22₁...22₄ has six contacts, three of them are linked to the bus lines upstream of a connector and three contacts that are linked to the bus lines downstream of the connector.

Furthermore, each peripheral unit 24 includes a corresponding number of contacts. As can be understood from the schematical representation of the peripheral units 24, they are configured in such a way as to connect the upstream and downstream contacts of a respective line at the connector to which they are assembled, thereby restoring the bus lines and communication in the bus lines downstream of the connector.

In practice, the connectors may e.g. take the form of sockets with six contacts. The peripheral units may then include a plug portion with six contact pins adapted to the connectors.

It will be further appreciated that the bus controller 12 includes means for detecting a default-addressed peripheral unit 24 connected to the bus wiring 14 and for assigning an address thereto. The term " default-addressed peripheral unit" herein refers to a peripheral unit that has not yet been identified in the bus system and that thus has a default address value. Such a default address value, e.g. 0 or F, is typically set by the manufacturer and is generally identical for all the peripheral units of a given type, or even of a given manufacturer.

The bus controller may detect such a default-addressed peripheral unit by interrogating the peripheral units in the system 10. Presence of a default-addressed peripheral unit in the system is thus indicated by a default address value emitted by a peripheral unit. In Figs1 and 2, this initial address value is indicated "0".

In order for the bus controller 12 to be capable of individually controlling each peripheral unit 24, a different address is advantageously assigned to each of the peripheral units.

It will be noted that, due to the structure of the bus system 10, the units must be assembled to the latter in sequence, starting with the first connector 22₁ (closest to the bus controller). Indeed, it is initially the only connector that is connected to the bus controller 12.

In Fig.1, a peripheral unit 24 is connected to the first connector 22₁. Upon connection of the unit 24 to the bus wiring 14, the bus controller 12 will detect the presence of a default-addressed peripheral unit 24, and will assign an address to this peripheral unit 24 (e.g. address "1" as shown in Fig.1).

As already explained, the assembly of the peripheral unit to connector 22₁ also restores the bus lines at the level of the connector 22₁, so that communication is permitted in the bus wiring between the bus controller and the second connector 22₂. Hence, when a peripheral unit 24 is connected to the second controller 22₂, as shown in Fig.2, the bus controller 12 will detect the presence of a default-addressed peripheral unit 24. The bus controller will then assign an address to this detected, default-addressed unit 24, that is different from the address already assigned to the peripheral unit 24 on connector 22₁. This is shown in Fig.2 where the address of the peripheral unit on connector 22₂ is indicated "2", whereas it had the default value "0" in Fig.1 before its assembly.

If a peripheral unit 24 had been assembled to the second connector 22₂, with the first connector 22₁ unoccupied, no communication in the bus would have been possible, preventing the allocation of an address to the peripheral unit 24.

Hence, in the present system, the order of assembly of the peripheral units is imposed by the structure of the bus wiring. During assembly, there is only one unoccupied connector that can be in communication with the bus controller, so that the latter will necessarily know the position of a detected default-addressed peripheral unit. As a result, the present system ensures a proper automatic assignment of addresses to the peripheral units and avoids assembly errors.

Preferably, the bus controller is programmed to periodically detect the presence of a default-addressed peripheral unit, at least as long as all peripheral units have not been yet assembled. The bus controller may e.g. interrogate the bus lines once or twice per second until all peripheral units have been assembled to the system.

The bus controller advantageously comprises means for emitting an audio or visual signal each time an address is assigned to a peripheral unit 24. Hence, if a peripheral unit is connected to an unoccupied connector that is not in communication with the bus controller (such as e.g. connector 22₄ in Fig.2), no signal will be emitted. This will help the operator in his task. Alternatively, the peripheral units may be programmed to carry out a short sequence upon connection to the correct connector, to indicate the operator that the assembly was properly made.

## Claims

1. A bus system comprising:
a bus controller;
a bus wiring comprising at least one bus line and connected at one end to said bus controller;
a number of connectors for peripheral units arranged in series along said bus wiring;
a number of peripheral units each connected to a respective connector on said bus wiring;
wherein, said bus system is designed in such a way that, as long as a peripheral unit has not been connected to a given connector, communication in said at least one bus line downstream of this connector is interrupted, and that upon connection to a peripheral unit communication in said at least one bus line is restored at this connector; and
wherein said bus controller comprises means for detecting a default-addressed peripheral unit on said bus wiring and assigning an address thereto.

2. The bus system according to claim 1, wherein said bus system comprises means for signalling to an operator that an address has been assigned to a peripheral unit.

3. The bus system according to claim 1 or 2, wherein
said at least one line is interrupted at each connector; and
each of said peripheral units comprises means for restoring said interrupted line at said connector upon connection thereto.

4. The bus system according to any one of the preceding claims, wherein said bus system includes at least two wires, at least one of them, preferably all of them, being interrupted at each connector.

5. The bus system according to claim 4, wherein said bus system is based on the CAN or LIN bus technology.

6. The bus system according to any one of the preceding claims, wherein said bus wiring is one of a wiring harness, a rigid printed circuit board and a flexible printed circuit board.

7. A method for assigning an address to peripheral units in a bus system, said bus system comprising a bus controller and a bus wiring including at least one bus line and connected at one end to said bus controller, a number of connectors for peripheral units being arranged in series along said bus wi ring; said bus system being designed so that said at least one line of said bus wiring is interrupted at each connector that is not connected to a respective peripheral unit, and that upon connection of a respective peripheral unit said line is restored;
said method comprising the steps of:
(a) detecting the presence of a default-addressed peripheral unit in the bus system;
(b) upon detection of a default-addressed peripheral unit, assigning an address to said non-identified peripheral unit.

8. The method according to claim 7, comprising the step of signalling to an operator that an address has been assigned to a peripheral unit.

9. The method according to claim 7 or 8, wherein said bus controller is in an active state when said peripheral units are connected to said connectors.

10. The method according to claim 7, 8 or 9, wherein said peripheral units are connected one after another to said connectors respecting the order of the connectors on the bus wiring, starting with the connector closest to said bus controller.

11. The method according to any one of claims 7 to 10, wherein said address assigned to a default-addressed peripheral unit at step (b) is different from the other addresses already used in said bus system.

12. The method according to any one of claims 7 to 11, wherein step (a) includes periodically interrogating peripheral units connected to said bus system.

13. The method according to any one of claims 7 to 12, wherein the default address value initially programmed in a default-addressed peripheral unit is used by said bus controller for determining the subsequent control of the peripheral unit.
